# EUROPEAN PATENT APPLICATION

(11) **EP 2 774 499 A1**
(43) Date of publication of application: **10.09.2014**
(21) Application number: 14154059.1
(22) Date of filing: 06.02.2014
(51) Int. Cl.: A41D 31/02, A41D 31/00, B32B 5/26, B32B 7/08, B32B 7/12, B32B 9/02, B32B 27/12, B32B 27/32, B32B 27/36, B32B 27/40, B32B 3/08, B32B 3/18, B32B 3/26

(54) **Elastic feather product**

(30) Priority: 09.03.2013 CN 201320109347 U
(71) Applicant: Wu, Kun-Hai, New Taipei City 234 (TW)
(72) Inventor: Wu, Kun-Hai, New Taipei City 234 (TW)
(74) Representative: Horak, Michael

(57) **Abstract**

An elastic feather product comprises a stuffed layer (1), multiple elastic thin layers (2), and multiple elastic fabric layers (3). The elastic thin layers (2) are disposed on two opposing surfaces of the stuffed layer (1) and attached to the surfaces of the stuffed layer (1). The elastic fabric layers (3) are each disposed on one of the elastic thin layers (2) and attached to the elastic thin layer (2). As such, the stuffed layer (1) can be securely sandwiched between the elastic thin layers (2), so that the filling feathers contained in the stuffed layer (1) can be prevented from leakage, so that a persistent warmth effect can be obtained. Furthermore, the elastic fabric layers (3) attached to the elastic thin layers (2) can provide adequate elasticity for the feather product, so that the clothes using the feather product can fit a user more properly and facilitate the user's movement.

## Description

### (a) Technical Field of the Invention

The present invention relates to an elastic feather product and, more particularly, to an elastic feather product that can provide adequate elasticity and prevent the filling feathers from leakage, so as to achieve a persistent warmth effect.

### (b) Description of the Prior Art

With the progress of the times, people have an increasingly high demand for life quality. As compared to the past, there is a great difference on people's lifestyle.

In the past, people should wear a large overcoat in winter for keeping warm. The overcoat generally includes wool fabric at its internal side and high-density or multi-layer fabric at its external side. Although it can keep warm for a user, it is heavy and may be inconvenient when the user engages in an activity.

To avoid the drawback of the overcoat, clothes being filled with feather or other filler capable of keeping warm came in the market. As to the filler-contained clothes, the filler is filled in a fabric product with several sewing partitions or an inelastic fabric product to achieve the effect of heat preservation.

However, the filler-contained clothes have the following disadvantages:
1. After a long time of use, some filling material in one partition of the clothes may fit through the fabric or move to other partitions of the product, thereby reducing the effect of heat preservation.
2. Although the inelastic fabric product can alleviate the loss of the filling material and thus maintain the warmth capability of the product, it may bring inconvenience and discomfort to users engaging in activities.

Thus, there is a need to develop an improved fabric product to solve the disadvantages of the conventional clothes. Based on long-term experiences of related works and constant test and innovation on fabric products, the applicant has contrived an elastic feather product that can avoid losing filling feathers and provide adequate elasticity for clothes.

### SUMMARY OF THE INVENTION

The primary object of the present invention is to provide an elastic feather product that can provide adequate elasticity and prevent the filling feathers from leakage to solve the disadvantages of conventional feather clothes.

To achieve the above object, the elastic feather product comprises a stuffed layer, at least two elastic thin layers, and at least two elastic fabric layers. The elastic thin layers are respectively disposed on two opposing surfaces of the stuffed layer and attached to the surfaces of the stuffed layer. The elastic fabric layers are each disposed on one of the elastic thin layers and attached to one surface of a corresponding elastic thin layer.

With the above structure, the stuffed layer can be securely sandwiched between the elastic thin layers, so that the filling feathers contained in the stuffed layer can be prevented from leakage, so that a persistent warmth effect can be obtained. Furthermore, the elastic fabric layers attached to the elastic thin layers can provide adequate elasticity for the product, so that the clothes using the feather product can fit a user more properly and facilitate the user's movement.

Other objects, advantages, and novel features of the present invention will become more apparent from the following detailed description when taken in conjunction with the accompanying drawings.

### BRIEF DESCRIPTION OF THE DRAWINGS

FIG 1 shows a 3-dimensional view of a first embodiment of the present invention.
FIG 2 shows an exploded view of the first embodiment of the present invention.
FIG 3 shows a sectional view of the first embodiment of the present invention.
FIG 4 shows an application of the present invention, wherein a suit of sportswear using the product of the present invention is made.
FIG 5 shows a sectional view of a second embodiment of the present invention.
FIG 5A shows a sectional view of a third embodiment of the present invention.
FIG 6 shows a sectional view of a fourth embodiment of the present invention.

### DETAILED DESCRIPTION OF THE PREFERRED EMBODIMENTS

To allow the features and advantages of the present invention to be fully understood, various embodiments are illustrated with reference to the accompanying drawings in the following paragraphs.

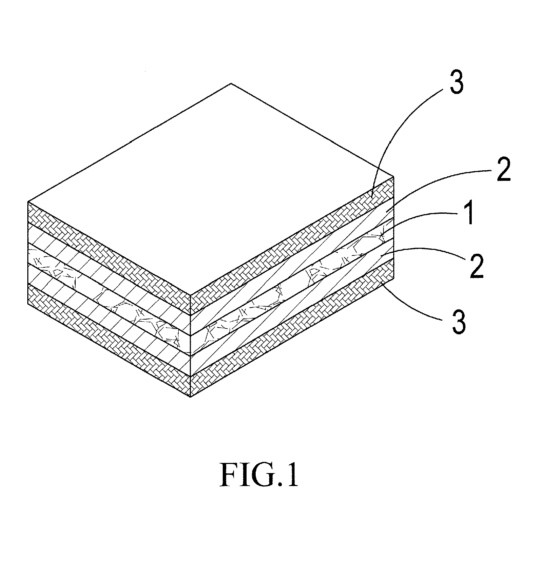

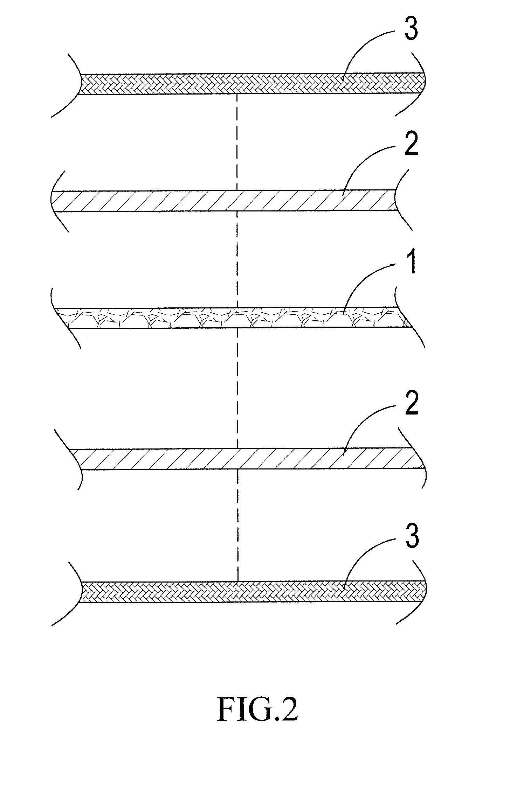

Referring to FIGS. 1 through 3, an elastic feather product according to a first embodiment of the present invention is shown, which comprises a stuffed layer 1, two elastic thin layers 2, and two elastic fabric layers 3.

The two elastic thin layers 2 are respectively disposed on two opposing surfaces of the stuffed layer 1 and attached to the surfaces of the stuffed layer 1.

The two elastic fabric layers 3 are each disposed on one surface of a corresponding elastic thin layer 2 that is away from the stuffed layer 1 and are each attached to the surface.

The stuffed layer 1 is stuffed with feather. The elastic thin layers 2 are made of polyethylene terephthalate (PET), thermoplastic polyurethane (TPU), polytetrafluoroethylene (PTFE), or polyurethane (PU). Furthermore, the elastic thin layers 2 can be each provided with a plurality of holes on one surface thereof.

Furthermore, the elastic thin layers 2 can be attached to the stuffed layer 1 by way of hot melt attachment, glue attachment, or sewing attachment. The elastic fabric layers 3 can be attached to the elastic thin layers 2 by way of hot melt attachment, glue attachment, or sewing attachment.

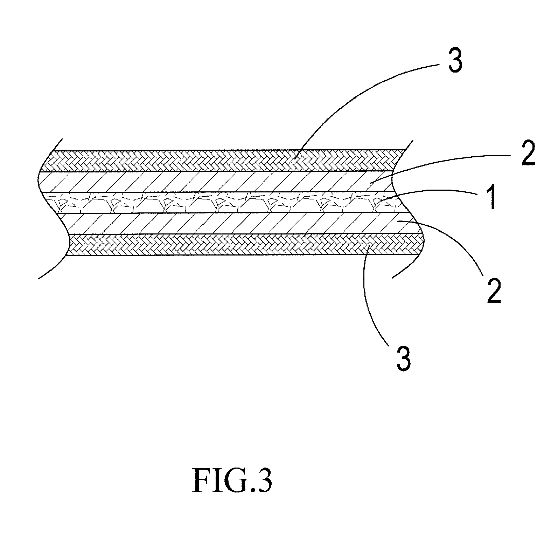

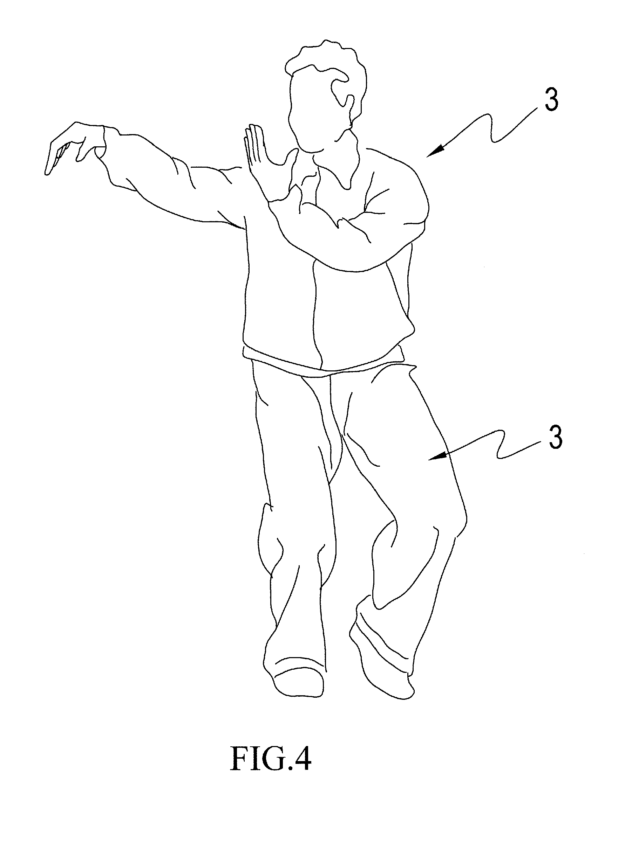

Referring to FIG 3 and FIG 4, in manufacturing the elastic feather product, first of all, one elastic thin layer 2 and one elastic fabric layer 3 can be attached together, and then another elastic thin layer 2 and another elastic fabric layer 3 can be attached together, wherein the elastic thin layers 2 can be each provided with a plurality of holes according to a demand. Thereafter, one stuffed layer 1 can be taken to be disposed between the two combined layers (each combined layer including one elastic thin layer 2 and one elastic fabric layer 3) and attached to them by way of heat melt attachment, glue attachment, or sewing attachment, so that the stuffed layer 1 can be securely sandwiched between the elastic thin layers 2. Since the stuffed layer 1 is securely sandwiched between the elastic thin layers 2, feathers contained in the stuffed layer 1 can be prevented from leaking out. Furthermore, the elastic fabric layers 3 can provide adequate elasticity for clothes, and thus they can be applied to various feather products (such as feather underclothes, feather jackets, feather trousers, feather blankets, feather comforters, feather bedding products, feather pads, down sleeping bag, and so on), to bring users more comfort and convenience.

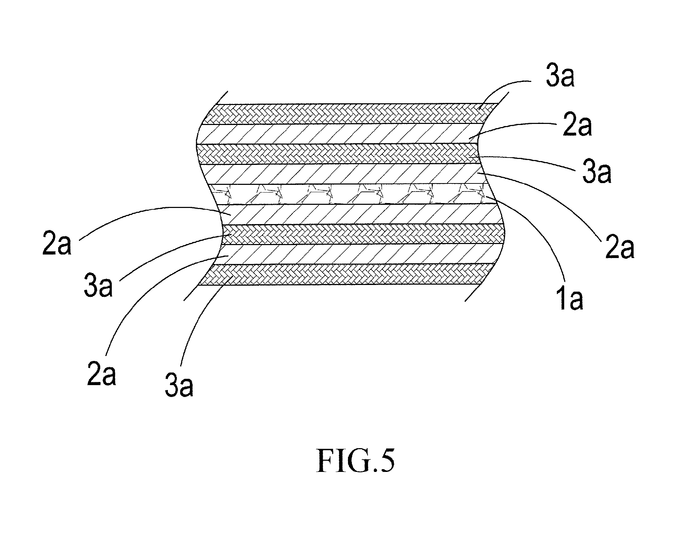

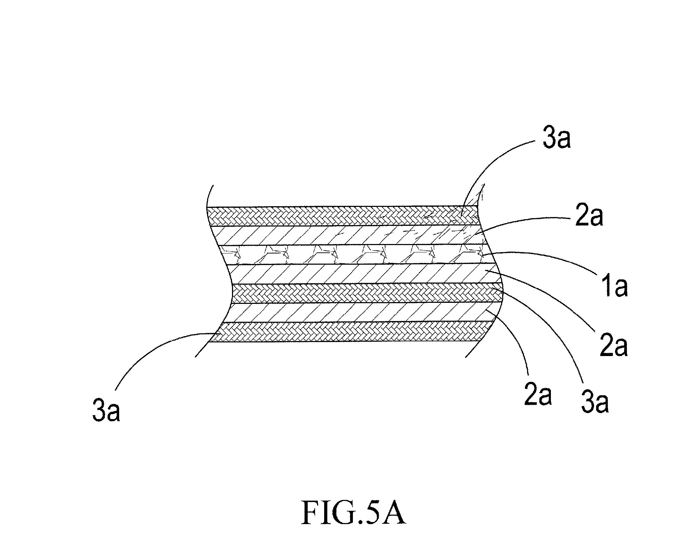

FIGS. 5 shows a second embodiment of the present invention, wherein two elastic thin layers 2a are respectively disposed on two opposing surfaces of the stuffed layer 1a and attached to the surfaces of the stuffed layer 1a; one surface of each elastic thin layer 2a away from the stuffed layer 1a is attached to one elastic fabric layer 3a that is in turn attached to a further elastic thin layer 2a being attached with a further elastic fabric layer 3a, thereby forming a fabric product having four fabric layers. The attachment between two layers can be made by way of heat melt attachment, glue attachment, or sewing attachment. FIG 5A shows a third embodiment of the present invention, wherein one set of elastic thin layer 2a and elastic fabric layer 3a is disposed on one surface of the stuffed layer 1a, whereas two sets of elastic thin layer 2a and elastic fabric layers 3a are disposed on the other surface of the stuffed layer 1a, thereby forming a fabric product having three fabric layers. Both of the above two embodiments employ the elastic fabric layers 3a at two sides of the fabric product, which can increase the elasticity and the warmth effect of the product, thereby bringing more comfort and convenience to users.

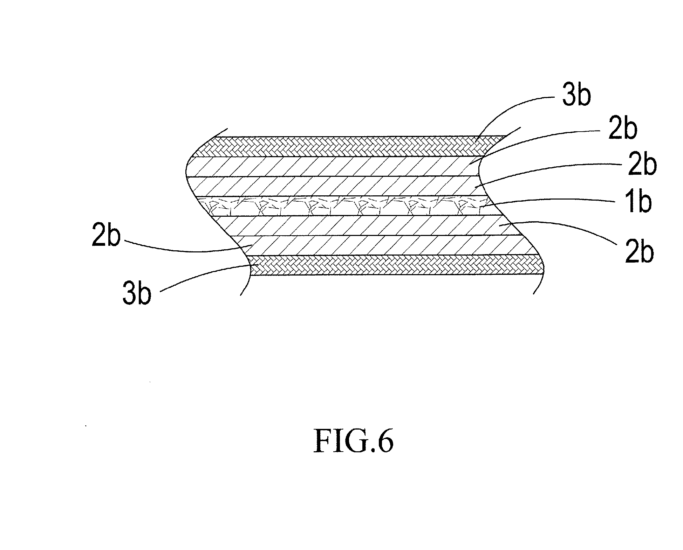

FIG6 shows a fourth embodiment of the present invention, which has a structure similar to the previous embodiments. The difference is that the stuffed layer 1b is sandwiched between two elastic thin layers 2b each of which is in turn attached to a further elastic thin layer 2b. The attachment between two layers can be made by way of heat melt attachment, glue attachment, or sewing attachment.

In conclusion, the present invention has the following advantages over the prior art:
1. The stuffed layer 1 can be securely sandwiched between the elastic thin layers 2, so that the feathers contained in the stuffed layer can be prevented from leakage.
2. The elastic thin layers 2, after being attached to the stuffed layer 1, are further attached to the elastic fabric layers 3 to enhance the elasticity of the fabric product, so that the clothes using the products can fit users more properly and thus achieve the effect of heat preservation.
3. The stuffed layer 1, the elastic thin layers 2, and the elastic fabric layers 3 can be combined in different ways according to a demand to form a feather product, which in turn can be used to make various household items, such as clothes and bedding products.
4. The stuffed layer 1, the elastic thin layers 2, and the elastic fabric layers 3 can be combined by way of heat melt attachment, glue attachment, or sewing attachment to make various household items, such as clothes and bedding products.

In light of the foregoing description, the elastic feather product of the present invention is an innovative and useful creation.

Although the present invention has been described with a certain degree of particularity, it is understood that the present disclosure is made by way of example only and the combination and arrangement of parts may be resorted to without departing from the spirit and scope of the invention hereinafter claimed.

## Claims

1. An elastic feather product, comprising:
a stuffed layer (1);
at least two elastic thin layers (2) respectively disposed on two opposing surfaces of the stuffed layer (1) and attached thereto; and
at least two elastic fabric layers (3) each disposed on one of the elastic thin layers (2) and attached thereto.

2. The elastic feather product of claim 1, wherein the stuffed layer (1) is stuffed with feather.

3. The elastic feather product of claim 1, wherein the elastic thin layers (2) are made of polyethylene terephthalate (PET).

4. The elastic feather product of claim 1, wherein the elastic thin layers (2) are made of thermoplastic polyurethane (TPU).

5. The elastic feather product of claim 1, wherein the elastic thin layers (2) are made of polytetrafluoroethylene (PTFE).

6. The elastic feather product of claim 1, wherein the elastic thin layers (2) are made of polyurethane (PU).

7. The elastic feather product of claim 1, wherein the elastic thin layers (2) are each provided with a plurality of holes on one surface thereof.

8. The elastic feather product of claim 1, wherein the elastic thin layers (2) are attached to the stuffed layer (1) by way of hot melt attachment, glue attachment, or sewing attachment, and the elastic fabric layers (3) are each attached to one surface of a corresponding elastic thin layer (2) that is away from the stuffed layer (1).
